# EUROPÄISCHE PATENTANMELDUNG

(11) **EP 3 582 139 A1**
(43) Veröffentlichungstag der Anmeldung: **18.12.2019**
(21) Anmeldenummer: 19176658.3
(22) Anmeldetag: 27.05.2019
(51) Int. Cl.: G06K 9/00

(54) **KAMERA-BASIERTES ANDOCKEN VON FAHRZEUGEN MITTELS KÜNSTLICHER INTELLIGENZ**

(30) Priorität: 13.06.2018 DE 102018209382
(71) Anmelder: ZF Friedrichshafen AG, 88046 Friedrichshafen (DE)
(72) Erfinder: Herzog, Christian, 88045 Friedrichshafen (DE); Rapus, Martin, 88045 Friedrichshafen (DE)

(57) **Zusammenfassung**

Auswerteeinrichtung (20) an eine Andockstation (10), umfassend eine Eingangsschnittstelle (21), um wenigstens eine mit einem an dem Fahrzeug (30) anordenbaren bildgebenden Sensor (31) aufgenommene Aufnahme (34) der Andockstation (10) zu erhalten, wobei die Auswerteeinrichtung ausgeführt ist, ein künstliches neuronales Netzwerk (4) auszuführen, das trainierst ist, in Abhängigkeit der Aufnahme Bildkoordinaten von Stützpunkten (11) der Andockstation (10) zu ermitteln, in Abhängigkeit einer bekannten Geometrie der Stützpunkte (11) eine Position und/oder Orientierung des bildgebenden Sensors (31) relativ zu den Stützpunkten (11) zu ermitteln, und in Abhängigkeit der ermittelten Position und/oder Orientierung des bildgebenden Sensors (31) und einer bekannten Anordnung des bildgebenden Sensors (31) an dem Fahrzeug (30) eine Position und/oder Orientierung der Andockstation (10) relativ zu dem Fahrzeug (30) zu ermitteln, und eine Ausgangsschnittstelle (22), um in Abhängigkeit der ermittelten Position der Andockstation (10) relativ zu dem Fahrzeug (30) ein Signal für eine Fahrzeugsteuerungseinrichtung (32) bereitzustellen, um das Fahrzeug (30) zum Andocken an die Andockstation (10) zu steuern. Ferner bezieht sich die Erfindung auf ein Fahrzeug (30), Verfahren und Computerprogrammprodukt zum Andocken eines Fahrzeuges (30) an eine Andockstation (10) sowie eine Auswerteeinrichtung (1) und ein Verfahren zum Lokalisieren von Stützpunkten (11) der Andockstation (10).

## Beschreibung

Die Erfindung bezieht sich auf eine Auswerteeinrichtung zum Lokalisieren von Stützpunkten einer Andockstation nach Anspruch 1. Ferner bezieht sich die Erfindung auf ein Verfahren zum Lokalisieren von Stützpunkten einer Andockstation nach Anspruch 2. Außerdem bezieht sich die Erfindung auf eine Auswerteeinrichtung zum automatisierten Andocken eines Fahrzeuges an eine Andockstation nach Anspruch 4. Des Weiteren bezieht sich die Erfindung auf ein Fahrzeug zum automatisierten Andocken an eine Andockstation nach Anspruch 6. Die Erfindung bezieht sich auch auf ein Verfahren zum automatisierten Andocken eines Fahrzeuges an eine Andockstation nach Anspruch 7. Schließlich bezieht sich die Erfindung auf ein Computerprogrammprodukt zum Andocken eines Fahrzeuges an eine Andockstation nach Anspruch 13.

Eine Herausforderung des automatisierten Fahrens ist zum einen das Manövrieren im Straßenverkehr. Zum anderen, insbesondere im Nutzfahrzeugbereich, sind Aufgaben des automatisierten Fahrens Andockvorgänge, bei denen beispielsweise Waren verladen und/oder Werkzeuge gewechselt werden.

Die Druckschrift GB 2 513 393 beschreibt eine Anordnung mit einer Kamera und einem Target. Die Kamera ist an einem Fahrzeug befestigt. Das Target, zum Beispiel eine Mustertafel, ist an einem Anhänger befestigt. Indem das Target in den von der Kamera aufgenommenen Bildern identifiziert und lokalisiert wird, lässt sich eine Trajektorie berechnen. Diese Trajektorie beschreibt einen Weg in Richtung des Anhängers, den das Fahrzeug zum Ankoppeln des Anhängers zurücklegen muss.

Die Druckschrift DE 10 2006 035 929 B4 offenbart ein Verfahren zum sensorgestützten Unterfahren eines Objekts oder zum Einfahren in ein Objekt, insbesondere eine Wechselbrücke, mit einem Nutzfahrzeug, wobei Umgebungsinformation von wenigstens einem am Heck des Nutzfahrzeugs angeordneten Sensor erfasst wird, und wobei anhand der erfassten Umgebungsinformation die Relativposition zwischen dem Objekt und dem Nutzfahrzeug bestimmt wird, wobei entfernungsabhängig in wenigstens zwei Phasen Objektmerkmale eines hierarchischen Modells des Objekts sensorgesteuert ausgewählt werden, wobei während der Annäherung des Nutzfahrzeugs an das Objekt eine individuelle Modellbildung des Objekts anhand einzelner Objektmerkmale durch Modelladaption erfolgt. Dabei variiert das hierarchische Modell mit der Entfernung zur Wechselbrücke. Zum Beispiel werden im Fernbereich "grobe" Merkmale erkannt und im Nahbereich wird das Modell verfeinert für eine genauere Lokalisierung.

Hier setzt die Erfindung an. Der Erfindung hat die Aufgabe zugrunde gelegen, das automatisierte Andocken von Fahrzeugen zu verbessern.

Die Aufgabe wird gelöst durch eine Auswerteeinrichtung zum Lokalisieren von Stützpunkten einer Andockstation mit den Merkmalen des Anspruchs 1. Ferner wird die Aufgabe gelöst durch ein Verfahren zum Lokalisieren von Stützpunkten einer Andockstation mit den Merkmalen des Anspruchs 2. Außerdem wird die Aufgabe gelöst durch eine Auswerteeinrichtung zum automatisierten Andocken eines Fahrzeuges an eine Andockstation mit den Merkmalen des Anspruchs 4. Des Weiteren wird die Aufgabe gelöst durch ein Fahrzeug zum automatisierten Andocken an eine Andockstation mit den Merkmalen des Anspruchs. Die Aufgabe wird auch gelöst durch ein Verfahren zum automatisierten Andocken eines Fahrzeuges an eine Andockstation mit den Merkmalen des Anspruchs 7. Schließlich wird die Aufgabe gelöst durch ein Computerprogrammprodukt zum Andocken eines Fahrzeuges an eine Andockstation mit den Merkmalen des Anspruchs 13.

Vorteilhafte Ausgestaltungen und Weiterbildungen sind in den Unteransprüchen angegeben.

Die erfindungsgemäße Auswerteeinrichtung zum Lokalisieren von Stützpunkten einer Andockstation in Aufnahmen der Andockstation umfasst eine erste Eingangsschnittstelle, um Ist-Trainingsdaten zu erhalten. Die Ist-Trainingsdaten umfassen die Aufnahmen der Andockstation. Für das Training liegen Positionsdaten der Stützpunkte als getrennte Informationen vor. Ferner umfasst die Auswerteeinrichtung eine zweite Eingangsschnittstelle, um Soll-Trainingsdaten zu erhalten. Die Soll-Trainingsdaten umfassen Soll-Positionsdaten der jeweiligen Stützpunkte in den Aufnahmen. Die Auswerteeinrichtung ist ausgeführt, ein künstliches neuronales Netzwerk mit den Ist-Trainingsdaten vorwärts zu speisen und in dieser Vorwärtsspeisung mit dem künstlichen neuronalen Netzwerk ermittelte Ist-Positionsdaten der jeweiligen Stützpunkte zu erhalten. Ferner ist die Auswerteeinrichtung ausgeführt, Gewichtungsfaktoren für Verbindungen von Neuronen des künstlichen neuronalen Netzwerks durch Rückwärtsspeisen einer Abweichung zwischen den Ist-Positionsdaten und den Soll-Positionsdaten anzupassen zur Minimierung der Abweichung, um die Soll-Positionsdaten der Stützpunkte zu lernen. Des Weiteren umfasst die Auswerteeinrichtung eine Ausgangsschnittstelle, um die Ist-Positionsdaten bereitzustellen.

Die nachfolgenden Definitionen gelten für den gesamten Gegenstand der Erfindung.

Eine Auswerteeinrichtung ist eine Vorrichtung, die eingehende Informationen verarbeitet und ein aus dieser Verarbeitung resultierendes Ergebnis ausgibt. Insbesondere ist eine elektronische Schaltung, wie zum Beispiel eine zentrale Prozessoreinheit oder ein Grafikprozessor, eine Auswerteinrichtung.

Stützpunkte, im Englischen auch keypoints genannt, sind zum Beispiel die Eckpunkte eines Anhängers und/oder weitere markante Punkte auf einem Anhänger oder einer Andockstation. Erfindungsgemäß werden also direkt die Stützpunkte, die Merkmale der Andockstation sind, detektiert. Das heißt, es werden insbesondere keine Freiräume zwischen Stützen von Wechselbrücken zur Klassifizierung herangezogen, so dass ein kompliziertes Objekt-Freiraum-Modell, das mit der Entfernung zur Wechselbrücke variiert, nicht verwendet werden muss.

Eine Andockstation ist ein Gegenstand, an den ein Fahrzeug andocken kann. Im angedockten Zustand ist das Fahrzeug an die Andockstation angekoppelt. Beispiele für eine Andockstation sind ein Anhänger, ein Container, eine Wechselbrücke oder ein Schiffsanleger, zum Beispiel ein Landungssteg. Ein Fahrzeug ist ein Landfahrzeug, zum Beispiel ein Personenkraftwagen, ein Nutzfahrzeug, beispielsweise ein Lastkraftwagen oder eine Zugmaschine wie ein Traktor, oder ein Schienenfahrzeug. Ein Fahrzeug ist auch ein Wasserfahrzeug wie zum Beispiel ein Schiff.

Aufnahmen sind Bilder, die mit bildgebenden Sensoren gemacht werden. Eine digitale Kamera umfasst einen bildgebenden Sensor. Die Aufnahmen sind insbesondere Farbaufnahmen.

Künstliche Intelligenz ist ein Oberbegriff für die Automatisierung intelligenten Verhaltens. Beispielsweise lernt ein intelligenter Algorithmus, zweckgerichtet auf neue Informationen zu reagieren. Ein künstliches neuronales Netzwerk, im Englischen als Artificial Neural Network bezeichnet, ist ein intelligenter Algorithmus. Ein intelligenter Algorithmus ist ausgeführt zu lernen, zweckgerichtet auf neue Informationen zu reagieren.

Um zweckgerichtet auf neue Informationen reagieren zu können, ist es erforderlich, dass eine künstliche Intelligenz zunächst die Bedeutung von vorbestimmten Informationen lernt. Dazu wird die künstliche Intelligenz mit Validierungsdaten trainiert. Validierungsdaten ist allgemein ein Oberbegriff für Trainingsdaten oder Testdaten. Insbesondere enthalten Trainingsdaten neben den eigentlichen Daten auch Informationen über die Bedeutung der jeweiligen Daten. Das heißt, die Trainingsdaten, auf denen die künstliche Intelligenz lernt und die Ist-Trainingsdaten genannt werden, sind gelabelt. Soll-Trainingsdaten sind die realen, gegebenen Informationen. Insbesondere sind die Soll-Positionsdaten zweidimensionale Bildkoordinaten der Stützpunkte. Diese Trainingsphase ist inspiriert von dem Lernprozess eines Gehirns.

Im Speziellen sind die Validierungsdaten ein Datensatz, mit dem der Algorithmus während der Entwicklungszeit getestet wird. Da Aufgrund der Tests vom Entwickler auch Entscheidungen getroffen werden, die den Algorithmus beeinflussen, wird am Ende der Entwicklung ein weiterer Datensatz, der Testdatensatz, herangezogen für eine finale Bewertung. Zum Beispiel bilden Aufnahmen der Andockstation vor verschiedenen Hintergründen einen weiteren Datensatz.

Das Trainieren mit Validierungsdaten wird maschinelles Lernen genannt. Eine Teilmenge des maschinellen Lernens ist das tiefgehende Lernen, das sogenannte Deep Learning, bei dem eine Reihe hierarchischer Schichten von Neuronen, sogenannten Hidden Layers, genutzt wird, um den Prozess des maschinellen Lernens durchzuführen.

Neuronen sind die Funktionseinheiten eines künstlichen neuronalen Netzwerks. Ein Output eines Neurons ergibt sich im Allgemeinen als Wert einer Aktivierungsfunktion ausgewertet über eine mit Gewichtungsfaktoren gewichtete Summe der Inputs plus einen systematischen Fehler, dem sogenannten Bias. Ein künstliches neuronales Netzwerk mit mehreren Hidden Layers ist ein Deep Neural Network.

Das künstliche neuronale Netzwerk ist zum Beispiel ein vollständig verbundenes Netzwerk, im Englischen als Fully Connected Network bezeichnet. In einem vollständig verbundenen Netzwerk ist jedes Neuron einer Schicht mit allen Neuronen der vorausgehenden Schicht verbunden. Jede Verbindung hat ihren eigenen Gewichtungsfaktor. Vorzugsweise ist das künstliche neuronale Netzwerk ein Fully Convolutional Network. In einem konvolutionalen neuronalen Netzwerk wird ein Filter auf eine Schicht von Neuronen unabhängig von der Position mit den gleichen Gewichtungsfaktoren angewendet. Das konvolutionale neuronale Netzwerk umfasst mehrere Poolingschichten zwischen den konvolutionalen Schichten. Poolingschichten verändern die Dimension einer zweidimensionalen Schicht in Breite und Höhe. Poolingschichten werden auch für höherdimensionale Schichten verwendet. Vorzugsweise ist das künstliche neuronale Netzwerk ein konvolutionales neuronale Netzwerk mit einer dem Fachmann bekannten Encoder-Decoder-Architektur.

Die Auswerteeinrichtung lernt damit, Stützpunkte in einer Aufnahme zu erkennen. Vorzugsweise ist die Ausgabe des künstlichen neuronalen Netzwerks eine pixelweise Wahrscheinlichkeit für den Stützpunkt, das heißt, für jeden Stützpunkt wird eine sogenannte prädizierte heatmap erhalten, die die pixelweise Wahrscheinlichkeit für den Stützpunkt angibt. Die Soll-Positionsdaten, auch ground truth heatmap genannt, umfassen dann vorzugsweise eine zweidimensionale Gauß Glocke mit normierter Höhe, deren Maximum an einer Stützpunktposition liegt. Die Abweichung der Ist-Positionsdaten von den Soll-Positionsdaten wird dann mittels einer Kreuzentropie zwischen ground truth heatmap und prädizierter heatmap minimiert.

Das erfindungsgemäße Verfahren zum Lokalisieren von Stützpunkten einer Andockstation in Aufnahmen der Andockstation umfassend die Verfahrensschritte
- Erhalten von Ist-Trainingsdaten und Positionsdaten der Stützpunkte,
- Erhalten von Soll-Trainingsdaten, wobei die Soll-Trainingsdaten Soll-Positionsdaten der jeweiligen Stützpunkte in den Aufnahmen umfassen,
- Vorwärtsspeisen eines künstlichen neuronalen Netzwerks mit den Ist-Trainingsdaten und Ermitteln von Ist-Positionsdaten der jeweiligen Stützpunkte mit dem künstlichen neuronalen Netzwerk,
- Rückwärtsspeisen einer Abweichung zwischen den Ist-Positionsdaten und den Soll-Positionsdaten, um Gewichtungsfaktoren für Verbindungen von Neuronen des künstlichen neuronalen Netzwerks derart anzupassen, dass die Abweichung minimiert wird, um die Soll-Positionsdaten der Stützpunkte zu lernen.

Das Verfahren ist ein Trainingsverfahren für das künstliche neuronale Netzwerk. In der sogenannten Trainingsphase werden mit Gewichtungsfaktoren Verbindungen zwischen Neuronen bewertet. Vorwärtsspeisen, im Englischen als forward propagation bezeichnet, bedeutet, dass eine Information in die Eingangsschicht des künstlichen neuronalen Netzwerks eingespeist wird, die folgenden Schichten durchläuft und in der Ausgabeschicht ausgegeben wird. Rückwärtsspeisen, im Englischen als backward propagation bezeichnet, bedeutet, dass eine Information die Schichten rückwärts durchläuft, das heißt von Ausgabesschicht in Richtung Eingangsschicht. Durch sukzessives Rückwärtsspeisen einer erhaltenen Abweichung von Soll- und Ist-Daten aus der Ausgabeschicht in die jeweils vorherige Schicht bis hin zur Eingangsschicht werden die Abweichungen der jeweiligen Schichten erhalten. Die Abweichungen sind eine Funktion der Gewichtungsfaktoren. Die Abweichung zwischen Ist-Ausgabe und Soll-Ausgabe wird durch eine Kostenfunktion bewertet. Bei der Rückwärtsspeisung wird der Gradient des Fehlers nach den einzelnen Gewichten rückwärtsgespeist. So weiß man, ob und wie stark sich die Abweichung zwischen Ist- und Soll-Ausgabe minimiert, wenn man das jeweilige Gewicht vergrößert oder verkleinert. Durch Minimierung der Abweichung in der Trainingsphase, zum Beispiel mittels der Methode der kleinsten Quadrate, der aus der Informationstheorie bekannten KreuzEntropie oder dem Gradientenabstiegsverfahren, werden damit die Gewichtungsfaktoren geändert. Dadurch wird bei erneutem Einspeisen der Eingabe eine Annäherung an die gewünschte Ausgabe erreicht. Die Rückwärtsspeisung ist zum Beispiel ausführlich in Michael A. Nielsen, Neural Networks and Deep Learning, Determination Press, 2015, beschrieben.

Vorteilhafterweise wird zur Durchführung dieses Verfahrens eine erfindungsgemäße Auswerteeinrichtung zum Lokalisieren von Stützpunkten einer Andockstation verwendet.

Das Trainingsverfahren wird vorzugsweise auf einem Graphikprozessor durchgeführt unter Ausnutzung von parallel computing.

Die erfindungsgemäße Auswerteeinrichtung zum automatisierten Andocken eines Fahrzeuges an eine Andockstation umfasst eine Eingangsschnittstelle, um wenigstens eine mit einem an dem Fahrzeug anordenbaren bildgebenden Sensor aufgenommene Aufnahme der Andockstation zu erhalten. Die Auswerteeinrichtung ist ausgeführt, ein künstliches neuronales Netzwerk auszuführen. Das künstliche neuronale Netzwerk ist trainiert, in Abhängigkeit der Aufnahme Bildkoordinaten von Stützpunkten der Andockstation zu ermitteln. Die Auswerteeinrichtung ist ferner ausgeführt, in Abhängigkeit einer bekannten Geometrie der Stützpunkte eine Position und/oder Orientierung des bildgebenden Sensors relativ zu den Stützpunkten zu ermitteln. Außerdem ist die Auswerteeinrichtung ausgeführt, in Abhängigkeit der ermittelten Position und/oder Orientierung des bildgebenden Sensors und einer bekannten Anordnung des bildgebenden Sensors an dem Fahrzeug eine Position und/oder Orientierung der Andockstation relativ zu dem Fahrzeug zu ermitteln. Ferner umfasst die Auswerteeinrichtung eine Ausgangsschnittstelle, um in Abhängigkeit der ermittelten Position der Andockstation relativ zu dem Fahrzeug ein Signal für eine Fahrzeugsteuerungseinrichtung bereitzustellen, um das Fahrzeug zum Andocken an die Andockstation automatisiert zu fahren.

Ein bildgebender Sensor stellt Bilder pro Zeitstempel bereit und nicht lediglich Punktwolken wie zum Beispiel Radar, Lidar oder Laser.

Bildkoordinaten sind zweidimensionale Koordinaten von Objekten aus einem dreidimensionalen Objektraum im Bezugsraum eines zweidimensionalen Bildes der Objekte.

Eine Fahrzeugsteuerungseinrichtung umfasst Regelkreise und/oder Aktuatoren, mit denen eine Längs- und/oder Querführung des Fahrzeuges geregelt und/oder gesteuert werden kann.

Damit kann das Fahrzeug vorteilhafterweise automatisiert an die berechnete Lage der Andockstation fahren und an der Andockstation andocken. Ein Signal ist zum Beispiel ein Lenkwinkel. Damit ist dann auch ein end-to-end Prozess realisierbar. Die Stützpunkt-basierte Posenschätzung ist vorteilhafterweise sehr genau und erlaubt mehr Kontrolle und damit mehr Sicherheit im Algorithmus im Vergleich zu end-to-end learning.

Die Fahrzeugsteuerungseinrichtung umfasst vorzugsweise eine Trajektorienregelung.

Aus einem dreidimensionalen Modell der Andockstation ist beispielsweisen eine Geometrie der Stützpunkte bekannt, zum Beispiel die relative Lage der Stützpunkte zueinander. Falls kein Modell vorab vorhanden ist, wurden die Stützpunkte erfindungsgemäß vorher ausgemessen. Eine Position und/oder Orientierung des bildgebenden Sensors relativ zu den Stützpunkten folgt dann aus der Kenntnis der Geometrie der Stützpunkte, vorzugsweise in Abhängigkeit intrinsischer Parameter des bildgebenden Sensors. Intrinsische Paramater des bildgebenden Sensors legen fest, wie optische Messungen des bildgebenden Sensors und Bildpunkten, insbesondere Pixelwerten, des bildgebenden Sensors zusammenhängen. Beispielswiese ist die Brennweite einer Optik oder die Pixeldichte des bildgebenden Sensors ein intrinsischer Parameter des bildgebenden Sensors.

Bevorzugt ist das künstliche neuronale Netzwerk nach dem erfindungsgemäßen Verfahren zum Lokalisieren von Stützpunkten einer Andockstation trainiert.

Das erfindungsgemäße Fahrzeug zum automatisierten Andocken an eine Andockstation umfasst eine Kamera mit einem bildgebenden Sensor. Die Kamera ist an dem Fahrzeug angeordnet, um Aufnahmen der Andockstation zu erhalten. Ferner umfasst das Fahrzeug eine erfindungsgemäße Auswerteeinrichtung zum automatisierten Andocken eines Fahrzeuges an eine Andockstation, um in Abhängigkeit einer ermittelten Position und/oder Orientierung der Andockstation relativ zu dem Fahrzeug ein Signal für eine Fahrzeugsteuerung bereitzustellen. Außerdem umfasst das Fahrzeug eine Fahrzeugsteuerungseinrichtung, um das Fahrzeug in Abhängigkeit des Signals automatisiert zum Andocken an die Andockstation zu fahren.

Damit kann das Fahrzeug vorteilhafterweise automatisiert an die berechnete Lage der Andockstation fahren und an der Andockstation andocken. Das Fahrzeug ist also vorzugsweise ein automatisiert, vorzugsweise teil-automatisiert, betreibbares Fahrzeug. Ein automatisiert betreibbares Fahrzeug ist ein Fahrzeug, das über eine technische Ausrüstung verfügt, die zur Bewältigung einer Fahreraufgabe, einschließlich Längs- und Querführung, das jeweilige Fahrzeug nach Aktivierung einer entsprechenden automatischen Fahrfunktion, insbesondere einer hoch- oder vollautomatisierten Fahrfunktion nach der Norm SAEJ3016, mit einer Fahrzeugsteuerungseinrichtung steuern kann. Ein teil-automatisiert betreibbares Fahrzeug kann bestimmte Fahraufgaben übernehmen. Ein vollautomatisiertes Fahrzeug ersetzt den Fahrer. Die SAEJ3016 Norm unterscheidet zwischen SAE Level 4 und SAE Level 5 Level 4 ist dadurch definiert, dass die Fahrmodus-spezifische Ausführung aller Aspekte der dynamischen Fahraufgabe durch ein automatisiertes Fahrsystem ausgeführt wird, selbst wenn der menschliche Fahrer auf Anfrage des Systems nicht angemessen reagiert. Level 5 ist dadurch definiert, dass die durchgängige Ausführung aller Aspekte der dynamischen Fahraufgabe durch ein automatisiertes Fahrsystem unter allen Fahr- und Umweltbedingungen, die von einem menschlichen Fahrer bewältigt werden können, ausgeführt wird. Ein reines Assistenzsystem, auf das sich die Erfindung ebenfalls bezieht, assistiert dem Fahrer bei der Durchführung einer Fahraufgabe. Dies entspricht SAE Level 1. Das Assistenzsystem unterstützt zum Beispiel mittels visueller Ausgabe auf einer Mensch-Maschinen-Schnittstelle, im Englischen als human machine interface, abgekürzt HMI, bezeichnet, einen Fahrer bei einem Lenkmanöver. Die Mensch-Maschinen-Schnittstelle ist zum Bespiel ein Bildschirm, insbesondere ein Touchscreen-Bildschirm.

Das erfindungsgemäße Verfahren zum automatisierten Andocken eines Fahrzeuges an eine Andockstation umfasst die Verfahrensschritte:
- Erhalten wenigstens einer mit einem an dem Fahrzeug anordenbaren bildgebenden Sensor aufgenommenen Aufnahme der Andockstation,
- Ausführen eines künstlichen neuronalen Netzwerks, das trainierst ist, in Abhängigkeit der Aufnahme Bildkoordinaten von Stützpunkten der Andockstation zu ermitteln,
- Ermitteln einer Position und/oder Orientierung des bildgebenden Sensors relativ zu den Stützpunkten in Abhängigkeit einer bekannten Geometrie der Stützpunkte,
- Ermitteln einer Position und/oder Orientierung der Andockstation relativ zu dem Fahrzeug in Abhängigkeit der ermittelten Position des bildgebenden Sensors und einer bekannten Anordnung des bildgebenden Sensors an dem Fahrzeug, und
- Bereitstellen eines Signals für eine Fahrzeugsteuerungseinrichtung in Abhängigkeit der ermittelten Position und/oder Orientierung der Andockstation relativ zu dem Fahrzeug.

Eine vorherige Manipulation der Andockstation, zum Beispiel durch Anbringen eines Sensors, Markern oder Mustertafeln, ist damit nicht mehr erforderlich. Eine Position und/oder Ausrichtung der Andockstation wird mittels der aufgenommenen Stützpunkte erkannt.

Bevorzugt fährt die Fahrzeugsteuerungseinrichtung das Fahrzeug in Abhängigkeit des Signals automatisiert zum Andocken an die Andockstation. Mittels diesem Verfahren kann ein Fahrzeug vorteilhafterweise automatisiert an eine Andockstation andocken.

Vorteilhafterweise wird bei dem Ermitteln der Position und/oder Orientierung des bildgebenden Sensors relativ zu den Stützpunkten in Abhängigkeit einer bekannten Geometrie der Stützpunkte ein bekanntes Modell der Andockstation verwendet wird, wobei das Modell die relative Lage der Stützpunkte zueinander angibt.

Vorzugsweise werden bei der Verwendung des bekannten Modells intrinsische Parameter des bildgebenden Sensors verwendet.

Besonders bevorzugt wird bei dem Ermitteln einer Position und/oder Orientierung der Andockstation relativ zu dem Fahrzeug in Abhängigkeit der ermittelten Position des bildgebenden Sensors und einer bekannten Anordnung des bildgebenden Sensors an dem Fahrzeug eine Koordinatentransformation aus dem System des bildgebenden Sensors in das System des Fahrzeuges durchgeführt. Aus dem Koordinatensystem des Fahrzeuges kann eine Trajektorienplanung zu der Andockstation hin erfolgen.

Mittels des erfindungsgemäßen Verfahrens werden also aus der Kenntnis der relativen dreidimensionalen Lage der Stützpunkte durch das künstliche neuronale Netzwerk zweidimensionale Projektionen der Stützpunkte erhalten und eine Trajektorie zur Andockstation ermittelt.

Vorteilhafterweise wird zur Durchführung des Verfahrens eine erfindungsgemäße Auswerteeinrichtung zum automatisierten Andocken eines Fahrzeuges an eine Andockstation oder ein erfindungsgemäßes Fahrzeug zum automatisierten Andocken eines Fahrzeuges an eine Andockstation verwendet.

Das erfindungsgemäße Computerprogrammprodukt zum Andocken eines Fahrzeuges an eine Andockstation ist ausgeführt, in einen Speicher eines Computers geladen zu werden und umfasst Softwarecodeabschnitte, mit denen die Verfahrensschritte des erfindungsgemäßen Verfahrens zum automatisierten Andocken eines Fahrzeuges an eine Andockstation ausgeführt werden, wenn das Computerprogrammprodukt auf dem Computer läuft.

Ein Programm gehört zur Software eines Daten verarbeitenden Systems, zum Beispiel einer Auswerteeinrichtung oder einem Computer. Software ist ein Sammelbegriff für Programme und zugehörigen Daten. Das Komplement zu Software ist Hardware. Hardware bezeichnet die mechanische und elektronische Ausrichtung eines Daten verarbeitenden Systems. Ein Computer ist eine Auswerteeinrichtung.

Computerprogrammprodukte umfassen in der Regel eine Folge von Befehlen, durch die die Hardware bei geladenem Programm veranlasst wird, ein bestimmtes Verfahren durchzuführen, das zu einem bestimmten Ergebnis führt. Wenn das betreffende Programm auf einem Computer zum Einsatz kommt, ruft das Computerprogrammprodukt einen technischen Effekt hervor, nämlich das Erhalten einer Trajektorienplanung zum automatisierten Andocken an eine Andockstation.

Das erfindungsgemäße Computerprogrammprodukt ist Plattform unabhängig. Das heißt, es kann auf jeder beliebigen Rechenplattform ausgeführt werden. Bevorzugt wird das Computerprogrammprodukt auf einer erfindungsgemäßen Auswerteeinrichtung zum automatisierten Andocken eines Fahrzeuges an eine Andockstation ausgeführt.

Die Softwarecodeabschnitte sind in einer beliebigen Programmiersprache geschrieben, zum Beispiel in Python.

Die Erfindung wird in den Figuren beispielhaft erläutert. Es zeigen:
Fig. 1 ein Ausführungsbeispiel eines erfindungsgemäßen Fahrzeuges und ein Ausführungsbeispiel einer Andockstation,
Fig. 2 ein Ausführungsbeispiel einer Andockstation,
Fig. 3 ein Ausführungsbeispiel einer erfindungsgemäßen Auswerteeinrichtung zum Lokalisieren von Stützpunkten einer Andockstation,
Fig. 4 eine schematische Darstellung des erfindungsgemäßen Verfahrens zum Lokalisieren von Stützpunkten einer Andockstation,
Fig. 5 ein Ausführungsbeispiel einer erfindungsgemäßen Auswerteeinrichtung zum automatisierten Andocken eines Fahrzeuges an eine Andockstation und
Fig. 6 ein Ausführungsbeispiel eines erfindungsgemäßen Verfahrens zum automatisierten Andocken eines Fahrzeuges an eine Andockstation.

In den Figuren beziehen sich gleiche Bezugszeichen auf gleiche oder funktionsähnliche Bezugsteile. In den einzelnen Figuren sind die jeweils relevanten Bezugsteile gekennzeichnet.

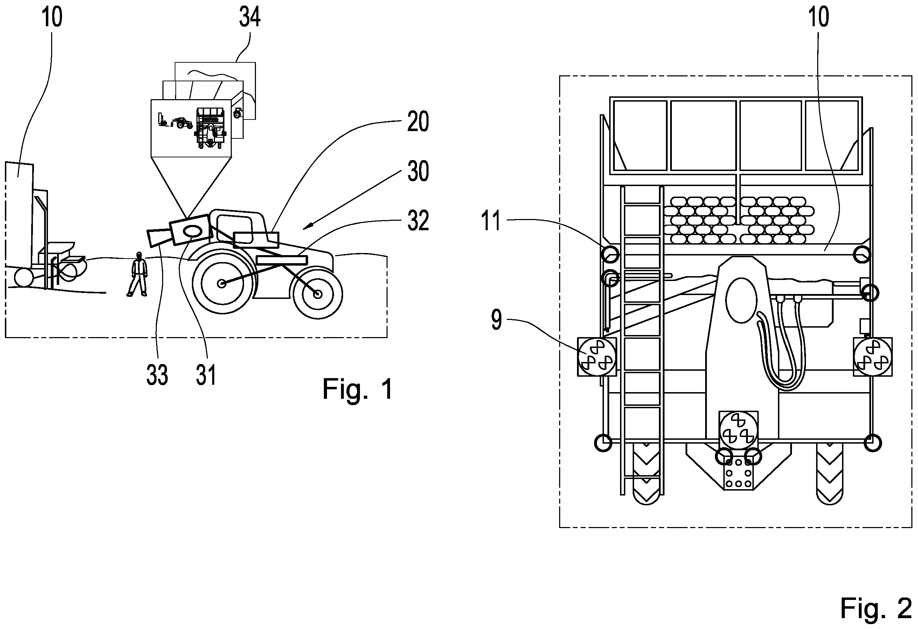

Fig.1 zeigt als Fahrzeug 30 einen Traktor. Der Traktor fährt einen Anhänger, der eine Andockstation 10 für den Traktor ist. Das Fahrzeug wird beim Erreichen der Andockstation 10 an diese angekoppelt. Die Anfahrt an die Andockstation 10 und das Andocken erfolgen automatisiert. Hierzu umfasst das Fahrzeug eine Kamera 33.

Die Kamera 33 macht Aufnahmen 34, die einen rückwärtigen Sichtbereich des Fahrzeuges 30 abdecken. Durch die Aufnahmen 34 wird die Andockstation 10 erfasst. Insbesondere werden die in Fig. 2 gezeigten Stützpunkte 11 erfasst. Fig. 2 zeigt auch eine Mustertafel 9, mittels denen eine Position und/oder Orientierung der Andockstation 10 auch erfasst werden kann. Erfindungsgemäß sind Mustertafeln 9 jedoch nicht zwingend erforderlich. Die Kamera 33 umfasst einen bildgebenden Sensor 31. Der bildgebende Sensor 31 sendet die Aufnahmen 34 an eine Auswerteeinrichtung 20 zum automatisierten Andocken des Fahrzeuges 30 an eine Andockstation 10.

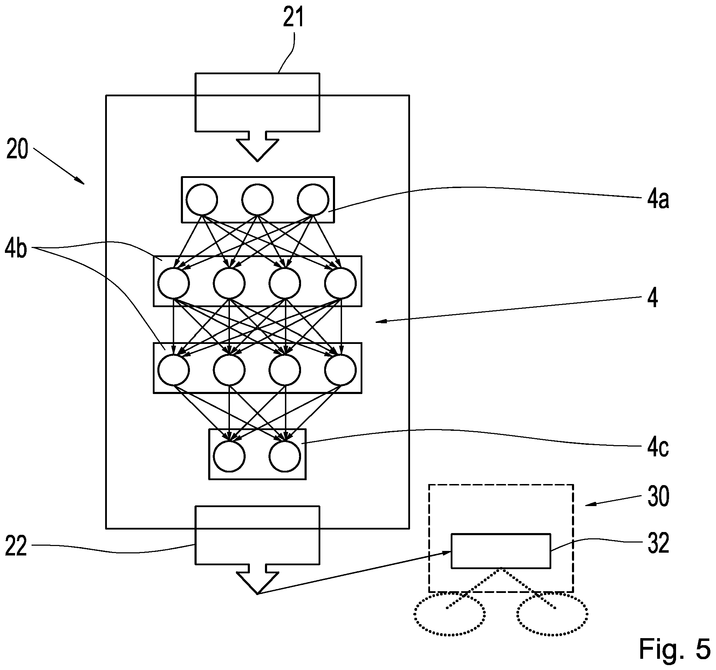

Die Auswerteeinrichtung 20 ist in Fig. 5 dargestellt. Die Auswerteeinrichtung 20 erhält über eine Eingangsschnittstelle 21 die Aufnahmen 34 des bildgebenden Sensors 31. Die Aufnahmen 34 werden einem künstlichen neuronalen Netzwerk 4 bereitgestellt.

Das künstliche neuronale Netzwerk 4 ist ein vollständig konvolutionales Netzwerk. Das künstliche neuronale Netzwerk 4 umfasst eine Eingabeschicht 4a, zwei hierarchische Schichten 4b und eine Ausgabeschicht 4c. Das künstliche neuronale Netzwerk kann mehrere, beispielsweise über 1000, hierarchische Schichten 4b umfassen.

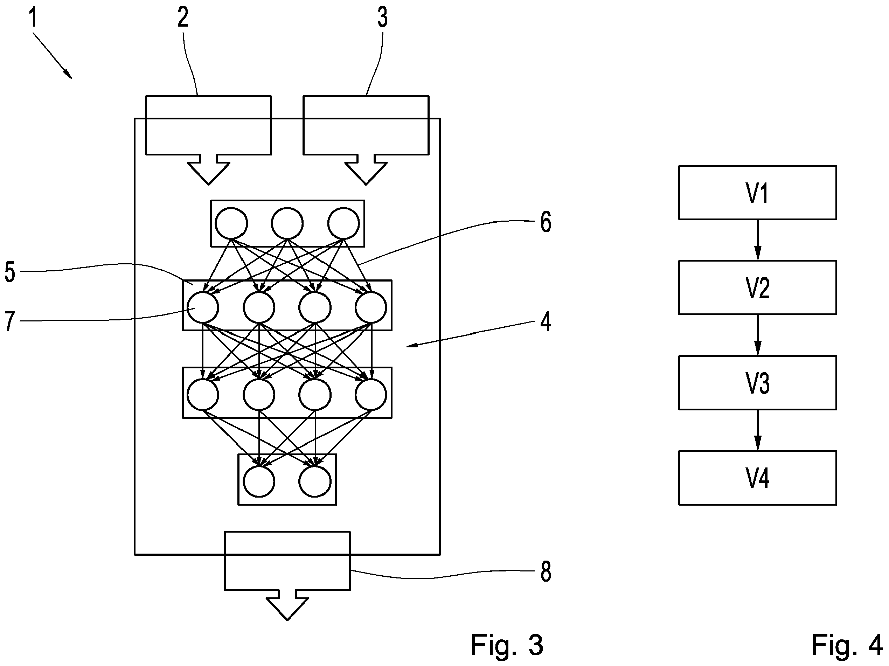

Das künstliche neuronale Netzwerk 4 ist nach dem in Fig. 4 gezeigten Verfahren zum Lokalisieren von Stützpunkten 11 einer Andockstation 10 in Aufnahmen 34 trainiert. Das heißt, dass das künstlich neuronale Netzwerk 4 in Abhängigkeit der Aufnahme 34 die Bildkoordinaten der Stützpunkte berechnet und daraus unter Kenntnis der Geometrie der Stützpunkte und der Anordnung des bildgebenden Sensors 31 an dem Fahrzeug 30 eine Position und Orientierung der Andockstation 10 relativ zu dem Fahrzeug 30 berechnet. In Abhängigkeit der Position und Orientierung der Andockstation 10 relativ zu dem Fahrzeug 30 berechnet die Auswerteeinrichtung 20 eine Trajektorie für das Fahrzeug 30 zu der Andockstation 10 hin und gibt ein entsprechendes Steuersignal an die Fahrzeugsteuerungseinrichtung 32 aus. Das Steuersignal stellt die Auswerteeinrichtung 20 über eine Ausgangsschnittstelle 22 der Fahrzeugsteuerungseinrichtung 32 bereit.

Mit der in Fig.3 gezeigten Auswerteeinrichtung 1 zum Lokalisieren von Stützpunkten 11 einer Andockstation 10 in Aufnahmen 34 der Andockstation 10 wird das in Fig. 4 gezeigte Trainingsverfahren zum Lokalisieren der Stützpunkte 11 der Andockstation 10 in Aufnahmen 34 der Andockstation 10 durchgeführt. Im Trainingsverfahren sind die Aufnahmen 34 gelabelt, das heißt, in den Aufnahmen sind die Stützpunkte 11 markiert.

Die Auswerteeinrichtung 1 umfasst eine erste Eingangsschnittstelle 2. Über die erste Eingangsschnittstelle 2 erhält die Auswerteeinrichtung 1 Ist-Trainingsdaten. Die Ist-Trainingsdaten sind die Aufnahmen 34. Das Erhalten der Ist-Trainingsdaten ist der in Fig. 4 gezeigte erste Verfahrensschritt V1.

Ferner umfasst die Auswerteeinrichtung 1 eine zweite Eingangsschnittstelle 3. Über die zweite Eingangsschnittstelle 3 erhält die Auswerteeinrichtung 1 Soll-Trainingsdaten. Die Soll-Trainingsdaten umfassen Soll-Positionsdaten der jeweiligen Stützpunkte 11 in den markierten Aufnahmen 34. Das Erhalten der Soll-Trainingsdaten ist der in Fig. 4 gezeigte zweite Verfahrensschritt V2.

Die Auswerteeinrichtung 1 umfasst außerdem ein künstliches neuronales Netzwerk 4. Das künstliche neuronale Netzwerk 4 weist zum Beispiel eine ähnliche Architektur wie das künstliche neuronale Netzwerk 4 der in Fig. 5 gezeigten Auswerteeinrichtung 20 auf.

Das künstliche neuronale Netzwerk 4 wird mit den Ist-Trainingsdaten vorwärts gespeist. In der Vorwärtsspeisung werden Ist-Positionsdaten der jeweiligen Stützpunkte 11 mit dem künstlichen neuronalen Netzwerk 4 ermittelt. Die Vorwärtsspeisung zusammen mit dem Ermitteln der Ist-Positionsdaten ist der in Fig. 4 gezeigte Verfahrensschritt V3.

Eine Abweichung zwischen den Ist-Positionsdaten und den Soll-Positionsdaten wird durch das künstliche neuronale Netzwerk 4 rückwärts gespeist. In der Rückwärtsspeisung werden Gewichtungsfaktoren 5 für Verbindungen 6 von Neuronen 7 des künstlichen neuronalen Netzwerks 4 derart angepasst, dass die Abweichung minimiert wird. Dabei werden die Soll-Positionsdaten der Stützpunkte 11 gelernt. Das Lernen der Soll-Positionsdaten ist der in Fig. 4 gezeigte Verfahrensschritt V4.

Außerdem umfasst die Auswerteeinrichtung 1 eine Ausgangsschnittstelle 8. Über die Ausgangsschnittstelle werden die mit dem künstlichen neuronalen Netzwerk 4 erhalten Ist-Positionsdaten, die sich während dem Trainingsverfahren den Soll-Positionsdaten annähern, bereitgestellt.

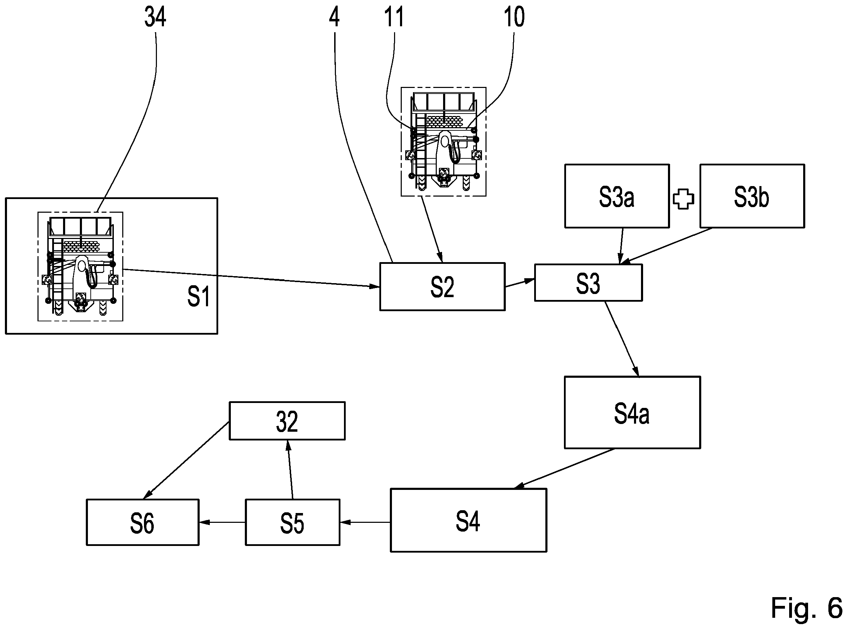

Mit der in Fig. 5 gezeigten trainierten Auswerteeinrichtung 20 wird das in Fig. 6 gezeigte Verfahren zum automatisierten Andocken des Fahrzeuges 30 an die Andockstation 10 durchgeführt. In einem ersten Verfahrensschritt S1 wird wenigstens eine mit dem an dem Fahrzeug 30 angeordneten bildgebenden Sensor 31 aufgenommene Aufnahme 34 der Andockstation 10 erhalten. Die Aufnahme 34 ist dabei ein gewöhnliches Bild ohne Markierung von Stützpunkten 11.

In einem zweiten Verfahrensschritt S2 wird das künstliche neuronale Netzwerks 4 ausgeführt. Das künstliche neuronale Netzwerk 4 ist trainiert, in Abhängigkeit der Aufnahme 34 Bildkoordinaten der Stützpunkte 11 der Andockstation 10 zu ermitteln.

In einem dritten Verfahrensschritt S3 werden eine Position und/oder eine Orientierung des bildgebenden Sensors 31 relativ zu den Stützpunkten 11 in Abhängigkeit einer bekannten Geometrie der Stützpunkte 11 ermittelt. Die Geometrie der Stützpunkte 11 wird in einem Verfahrensschritt S3a mittels eines bekannten dreidimensionalen Modells der Andockstation 10 ermittelt, wobei das Modell die relative Lage der Stützpunkte 11 zueinander angibt. Bei der Verwendung des bekannten Modells werden in einem Verfahrensschritt S3b intrinsische Parameter des bildgebenden Sensors 31 verwendet.

In einem Verfahrensschritt S4 werden eine Position und/oder eine Orientierung der Andockstation 10 relativ zu dem Fahrzeug 30 in Abhängigkeit der ermittelten Position des bildgebenden Sensors 31 und einer bekannten Anordnung des bildgebenden Sensors 31 an dem Fahrzeug 30 ermittelt. Dabei wird in einem Verfahrensschritt S4a eine Koordinatentransformation aus dem System des bildgebenden Sensors 31 in das System des Fahrzeuges 30 durchgeführt. Durch diese Koordinatentransformation ist die Position und/oder die Orientierung der Andockstation 10 in dem System des Fahrzeuges bekannt, um das Fahrzeug mittels der Trajektorienregelung automatisiert an die berechnete Lage der Andockstation 10 anzudocken.

In einem Verfahrensschritt S5 wird ein Signal für die Fahrzeugsteuerungseinrichtung 32 in Abhängigkeit der ermittelten Position und/oder der Orientierung der Andockstation 10 relativ zu dem Fahrzeug 30 bereitgestellt.

Die Fahrzeugsteuerungseinrichtung 32 fährt das Fahrzeug 30 in Abhängigkeit des Signals in einem Verfahrensschritt S6 automatisiert zum Andocken an die Andockstation 10.

### Bezugszeichen

- 1: Auswerteeinrichtung
- 2: erste Eingangsschnittstelle
- 3: zweite Eingangsschnittstelle
- 4: künstliches neuronales Netzwerk
- 4a: Eingabeschicht
- 4b: hierarchische Schicht
- 4c: Ausgabeschicht
- 5: Gewichtungsfaktoren
- 6: Verbindungen
- 7: Neuronen
- 8: Ausgangsschnittstelle
- 9: Mustertafel
- 10: Andockstation
- 11: Stützpunkt
- 20: Auswerteeinrichtung
- 21: Eingangsschnittstelle
- 22: Ausgangsschnittstelle
- 30: Fahrzeug
- 31: bildgebender Sensor
- 32: Fahrzeugsteuerungseinrichtung
- 33: Kamera
- 34: Aufnahme
- V1-V4: Verfahrensschritte
- S1-S6: Verfahrensschritte

## Patentansprüche

1. Auswerteeinrichtung (1) zum Lokalisieren von Stützpunkten (11) einer Andockstation (10) in Aufnahmen (34) der Andockstation (10) umfassend
• eine erste Eingangsschnittstelle (2), um Ist-Trainingsdaten zu erhalten, wobei die Ist-Trainingsdaten die Aufnahmen der Andockstation (10) umfassen, wobei in den Aufnahmen (34) die Stützpunkte (11) markiert sind,
• eine zweite Eingangsschnittstelle (3), um Soll-Trainingsdaten zu erhalten, wobei die Soll-Trainingsdaten Soll-Positionsdaten der jeweiligen Stützpunkte (11) in den Aufnahmen (34) umfassen,
wobei die Auswerteeinrichtung (1) ausgeführt ist,
• ein künstliches neuronales Netzwerk (4) mit den Ist-Trainingsdaten vorwärts zu speisen und in dieser Vorwärtsspeisung mit dem künstlichen neuronalen Netzwerk (4) ermittelte Ist-Positionsdaten der jeweiligen Stützpunkte (11) zu erhalten, und
• Gewichtungsfaktoren (5) für Verbindungen (6) von Neuronen (7) des künstlichen neuronalen Netzwerks (4) durch Rückwärtsspeisen einer Abweichung zwischen den Ist-Positionsdaten und den Soll-Positionsdaten anzupassen zur Minimierung der Abweichung, um die Soll-Positionsdaten der Stützpunkte (11) zu lernen,
und
• eine Ausgangsschnittstelle (8), um die Ist-Positionsdaten bereitzustellen.

2. Verfahren zum Lokalisieren von Stützpunkten (11) einer Andockstation (10) in Aufnahmen (34) der Andockstation (10) umfassend die Verfahrensschritte
• Erhalten von Ist-Trainingsdaten und Positionsdaten der Stützpunkte (V1),
• Erhalten von Soll-Trainingsdaten, wobei die Soll-Trainingsdaten Soll-Positionsdaten der jeweiligen Stützpunkte (11) in den Aufnahmen (34) umfassen (V2),
• Vorwärtsspeisen eines künstlichen neuronalen Netzwerks (4) mit den Ist-Trainingsdaten und Ermitteln von Ist-Positionsdaten der jeweiligen Stützpunkte (11) mit dem künstlichen neuronalen Netzwerk (4) (V3),
• Rückwärtsspeisen einer Abweichung zwischen den Ist-Positionsdaten und den Soll-Positionsdaten, um Gewichtungsfaktoren (5) für Verbindungen (6) von Neuronen (7) des künstlichen neuronalen Netzwerks (4) derart anzupassen, dass die Abweichung minimiert wird, um die Soll-Positionsdaten der Stützpunkte (11) zu lernen (V4).

3. Verfahren nach Anspruch 2, wobei zur Durchführung des Verfahrens eine Auswerteeinrichtung (10) nach Anspruch 1 verwendet wird.

4. Auswerteeinrichtung (20) zum automatisierten Andocken eines Fahrzeuges (30) an eine Andockstation (10), umfassend
• eine Eingangsschnittstelle (21), um wenigstens eine mit einem an dem Fahrzeug (30) anordenbaren bildgebenden Sensor (31) aufgenommene Aufnahme (34) der Andockstation (10) zu erhalten,
• wobei die Auswerteeinrichtung ausgeführt ist,
o ein künstliches neuronales Netzwerk (4) auszuführen, das trainiert ist, in Abhängigkeit der Aufnahme (34) Bildkoordinaten von Stützpunkten (11) der Andockstation (10) zu ermitteln,
∘ in Abhängigkeit einer bekannten Geometrie der Stützpunkte (11) eine Position und/oder Orientierung des bildgebenden Sensors (31) relativ zu den Stützpunkten (11) zu ermitteln, und
∘ in Abhängigkeit der ermittelten Position und/oder Orientierung des bildgebenden Sensors (31) und einer bekannten Anordnung des bildgebenden Sensors (31) an dem Fahrzeug (30) eine Position und/oder Orientierung der Andockstation (10) relativ zu dem Fahrzeug (30) zu ermitteln,
und
• eine Ausgangsschnittstelle (22), um in Abhängigkeit der ermittelten Position der Andockstation (10) relativ zu dem Fahrzeug (30) ein Signal für eine Fahrzeugsteuerungseinrichtung (32) bereitzustellen, um das Fahrzeug (30) zum Andocken an die Andockstation (10) automatisiert zu fahren.

5. Auswerteeinrichtung (20) nach Anspruch 4, wobei das künstliche neuronale Netzwerk (4) nach dem Verfahren nach Anspruch 2 oder 3 trainiert ist.

6. Fahrzeug (30) zum automatisierten Andocken an eine Andockstation (10), umfassend
• eine Kamera (33) mit einem bildgebenden Sensor (31), die an dem Fahrzeug (30) angeordnet ist, um Aufnahmen (34) der Andockstation (10) zu erhalten
• eine Auswerteeinrichtung (20) nach Anspruch 4 oder 5, um in Abhängigkeit einer ermittelten Position und/oder Orientierung der Andockstation (10) relativ zu dem Fahrzeug (30) ein Signal für eine Fahrzeugsteuerung bereitzustellen, und
• eine Fahrzeugsteuerungseinrichtung (32), um das Fahrzeug (30) in Abhängigkeit des Signals automatisiert zum Andocken an die Andockstation (10) zu fahren.

7. Verfahren zum automatisierten Andocken eines Fahrzeuges (30) an eine Andockstation (10), umfassend die Verfahrensschritte:
• Erhalten wenigstens einer mit einem an dem Fahrzeug (30) anordenbaren bildgebenden Sensor (31) aufgenommenen Aufnahme (34) der Andockstation (10) (S1),
• Ausführen eines künstlichen neuronalen Netzwerks (4), das trainierst ist, in Abhängigkeit der Aufnahme (34) Bildkoordinaten von Stützpunkten (11) der Andockstation (10) zu ermitteln (S2),
• Ermitteln einer Position und/oder Orientierung des bildgebenden Sensors (31) relativ zu den Stützpunkten (11) in Abhängigkeit einer bekannten Geometrie der Stützpunkte (11) (S3),
• Ermitteln einer Position und/oder Orientierung der Andockstation (10) relativ zu dem Fahrzeug (30) in Abhängigkeit der ermittelten Position des bildgebenden Sensors (31) und einer bekannten Anordnung des bildgebenden Sensors (31) an dem Fahrzeug (30) (S4),
und
• Bereitstellen eines Signals für eine Fahrzeugsteuerungseinrichtung (32) in Abhängigkeit der ermittelten Position und/oder Orientierung der Andockstation (10) relativ zu dem Fahrzeug (30) (S5),

8. Verfahren nach Anspruch 7, wobei die Fahrzeugsteuerungseinrichtung (32) das Fahrzeug (30) in Abhängigkeit des Signals automatisiert zum Andocken an die Andockstation (10) fährt (S6).

9. Verfahren nach Anspruch 7 oder 8, wobei bei dem Ermitteln der Position und/oder Orientierung des bildgebenden Sensors (31) relativ zu den Stützpunkten (11) in Abhängigkeit einer bekannten Geometrie der Stützpunkte (11) (S3) ein bekanntes Modell der Andockstation (10) verwendet wird, wobei das Modell die relative Lage der Stützpunkte (11) zueinander angibt (S3a).

10. Verfahren nach Anspruch 9, wobei bei der Verwendung des bekannten Modells intrinsische Parameter des bildgebenden Sensors (31) verwendet werden (S3b).

11. Verfahren nach einem der Ansprüche 7 bis 10, wobei bei dem Ermitteln einer Position und/oder Orientierung der Andockstation (10) relativ zu dem Fahrzeug (30) in Abhängigkeit der ermittelten Position des bildgeben-den Sensors (31) und einer bekannten Anordnung des bildgebenden Sensors an dem Fahrzeug (30) (S4) eine Koordinatentransformation aus dem System des bildgebenden Sensors (31) in das System des Fahrzeuges (30) durchgeführt wird (S4a).

12. Verfahren nach einem der Ansprüche 7 bis 11, wobei zur Durchführung des Verfahrens eine Auswerteeinrichtung (20) nach Anspruch 4 oder 5 oder ein Fahrzeug (30) nach Anspruch 6 verwendet wird.

13. Computerprogrammprodukt zum Andocken eines Fahrzeuges (30) an eine Andockstation (10), wobei das Computerprogrammprodukt
• ausgeführt ist, in einen Speicher eines Computers geladen zu werden und
• Softwarecodeabschnitte umfasst, mit denen die Verfahrensschritte des Verfahrens nach einem der Ansprüche 7 bis 11 ausgeführt werden, wenn das Computerprogrammprodukt auf dem Computer läuft.
